# EUROPÄISCHE PATENTSCHRIFT

(11) **EP 2 193 059 B1**
(45) Veröffentlichungstag und Bekanntmachung des Hinweises auf die Patenterteilung: **15.06.2011**
(21) Anmeldenummer: 08804232.0
(22) Anmeldetag: 16.09.2008
(51) Int. Cl.: B60W 10/06, B60W 10/10, B60W 10/08, B60W 20/00, B60W 10/02, B60K 6/48

(54) **VERFAHREN ZUM BETREIBEN EINES ANTRIEBSSTRANGS**
METHOD FOR OPERATING A DRIVE TRAIN
PROCÉDÉ PERMETTANT DE FAIRE FONCTIONNER UNE CHAÎNE CINÉMATIQUE

(30) Priorität: 22.09.2007 DE 102007045367
(43) Veröffentlichungstag der Anmeldung: 09.06.2010
(73) Patentinhaber: ZF Friedrichshafen AG, 88038 Friedrichshafen (DE)
(72) Erfinder: KALTENBACH, Johannes, 88048 Friedrichshafen (DE); WALLNER, Stefan, 6900 Bregenz (DE)
(86) Internationale Anmeldenummer: PCT/EP2008/062273
(87) Internationale Veröffentlichungsnummer: WO 2009/037238

(56) Entgegenhaltungen:
- WO-A-01/56824
- DE-A1- 10 260 435
- DE-A1- 19 814 402
- FR-A- 2 882 697

## Beschreibung

Die Erfindung betrifft ein Verfahren zum Betreiben eines zumindest ein Getriebe und einen Hybridantrieb umfassenden Antriebsstrangs eines Kraftfahrzeugs entsprechend dem Oberbegriff des Anspruchs 1 und wie es aus dem Dokument FR 2 882 697 bekannt ist.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft ein Verfahren zum Betreiben eines Antriebsstrangs, der zumindest ein Getriebe und als Antriebsaggregat einen Hybridantrieb umfasst.

Aus der US 2005/0221947 A1 ist ein Verfahren zum Betreiben eines ein Automatgetriebe und einen Hybridantrieb umfassenden Antriebsstrangs eines Kraftfahrzeugs bekannt, wobei einerseits zwischen einem Verbrennungsmotor des Hybridantriebs und einem Elektromotor des Hybridantriebs eine Kupplung und andererseits zwischen dem Elektromotor des Hybridantriebs und dem Automatgetriebe eine weitere Kupplung angeordnet ist. Dann, wenn der Antriebsstrang ausschließlich vom Elektromotor des Hybridantriebs angetrieben wird, kann nach diesem Stand der Technik der Verbrennungsmotor des Hybridantriebs dadurch gestartet werden, dass während der Ausführung einer Hochschaltung durch das Automatgetriebe des Antriebsstrangs die zwischen dem Verbrennungsmotor des Hybridantriebs und dem Elektromotor desselben angeordnete Kupplung geschlossen wird. Nach der US 2005/0221947 A1 dient demnach der Elektromotor des Hybridantriebs dem Starten des Verbrennungsmotors des Hybridantriebs, wobei das Starten des Verbrennungsmotors während der Ausführung einer Hochschaltung und demnach bei Unterbrechung der Zugkraft erfolgt. Das Starten des Verbrennungsmotors während der Ausführung einer Hochschaltung kann zu Komforteinbußen führen.

Hiervon ausgehend liegt der vorliegenden Erfindung das Problem zu Grunde, ein neuartiges Verfahren zum Betreiben eines ein Getriebe und einen Hybridantrieb umfassenden Antriebsstrangs zu schaffen.

Dieses Problem wird durch ein Verfahren zum Betreiben eines ein Getriebe und einen Hybridantrieb umfassenden Antriebsstrangs gemäß Anspruch 1 gelöst.

Erfindungsgemäß wird dann, wenn bei einem ausschließlichen elektromotorischen Antrieb der Elektromotor im Schubbetrieb betrieben wird und aus einem ermittelten Fahrerwunschmoment ein gewünschter Übergang vom Schubbetrieb in einen Zugbetrieb abgeleitet wird, der Verbrennungsmotor unter Ausnutzung des Schub-/Zugwechsels derart gestartet, dass die zwischen dem Verbrennungsmotor und dem Elektromotor angeordnete Kupplung zumindest teilweise geschlossen wird, sodass dieselbe ein zum Starten des Verbrennungsmotors erforderliches Moment überträgt.

Mit dem erfindungsgemäßen Verfahren wird demnach vorgeschlagen, dann, wenn bei abgeschaltetem Verbrennungsmotor der Elektromotor im Schubbetrieb zum elektrischen Bremsen und damit im sogenannten Rekuperationsbetrieb betrieben wird, und wenn weiterhin während des Rekuperationsbetriebs aus einem Fahrerwunschmoment ein gewünschter Übergang vom Schubbetrieb in den Zugbetrieb erkannt wird, den Verbrennungsmotor unter Ausnutzung des Schub-/Schubwechsels zu starten.

Das Starten des Verbrennungsmotors wird demnach als Reaktion auf einen Fahrerwunsch durchgeführt, so dass der Verbrennungsmotor für den Fahrer nicht überraschend gestartet wird und das Starten des Verbrennungsmotors nicht als unkomfortabel empfunden wird.

Nach einer vorteilhaften Weiterbildung der Erfindung wird der Verbrennungsmotor unter Ausnutzung des Schub-/Zugwechsels derart gestartet, dass dann, wenn das vom Elektromotor am Antriebstrang bereitgestellte Moment in etwa Null beträgt, der Elektromotor vom Abtrieb zur Bereitstellung einer Zugkraftunterbrechung abgekoppelt wird, dass anschließend der Verbrennungsmotor durch zumindest teilweises Schließen der zwischen dem Verbrennungsmotor und dem Elektromotor angeordneten Kupplung gestartet wird, und dass darauffolgend nach dem Starten des Verbrennungsmotors der Elektromotor an den Abtrieb zur Aufhebung der Zugkraftunterbrechung angekoppelt wird.

Im Sinne dieser vorteilhaften Weiterbildung der Erfindung erfolgt demnach das Starten des Verbrennungsmotors unter Ausnutzung des Schub-/Zugwechsels mit einer Zugkraftunterbrechung. Trotz der Zugkraftunterbrechung ergibt sich so gut wie keine Beeinträchtigung des Fahrkomforts, da zum Starten des Verbrennungsmotors die Phase, in welcher das am Antriebsstrang anliegende Moment in etwa Null beträgt, nur verlängert wird, ohne die Notwendigkeit eines vorherigen Lastabbaus. Dieser zugkraftunterbrochene Start des Verbrennungsmotors unter Ausnutzung des Schub-/Zugwechsels erfolgt schneller als ein zugkraftunterbrochener Start des Verbrennungsmotors ohne Ausnutzung des Schub-/Zugwechsels, da, wie bereits erwähnt, kein vorheriger Lastabbau erforderlich ist. Da der Start des Verbrennungsmotors bei Zugkraftunterbrechung rückwirkungsfrei zum Abtrieb des Antriebsstrangs ist, kann der Ablauf des Verbrennungsmotorstarts einfach abgestimmt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein erstes Antriebsstrangschema eines Kraftfahrzeugs, bei wel- chem das erfindungsgemäße Verfahren einsetzbar ist;
- Fig. 2: ein zweites Antriebsstrangschema eines Kraftfahrzeugs, bei welchem das erfindungsgemäße Verfahren einsetzbar ist; und
- Fig. 3: ein Diagramm zur Verdeutlichung einer bevorzugten Ausfüh- rungsform des erfindungsgemäßen Verfahrens zum Betreiben eines Antriebsstrangs eines Kraftfahrzeugs.

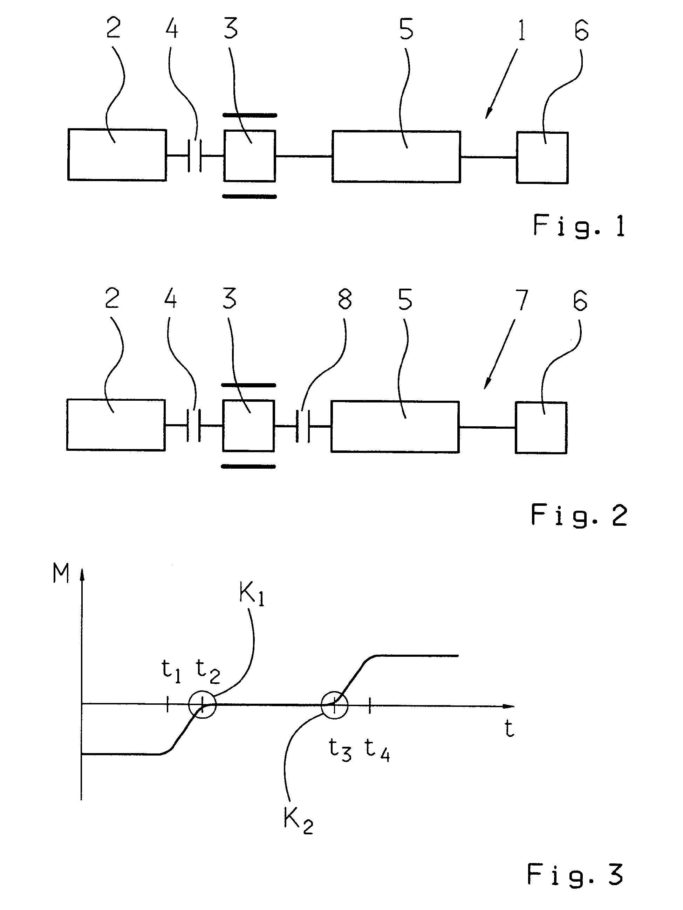

Die hier vorliegende Erfindung betrifft ein Verfahren zum Betreiben eines zumindest ein Getriebe und einen Hybridantrieb umfassenden Antriebsstrangs eines Kraftfahrzeugs. Ein Hybridantrieb umfasst einen Verbrennungsmotor und einen Elektromotor. Fig. 1 und 2 zeigen exemplarisch Antriebsstrangschemata eines Kraftfahrzeugs, bei welchen das erfindungsgemäße Verfahren einsetzbar ist.

So zeigt Fig. 1 ein Schema eines Antriebsstrangs 1 eines Kraftfahrzeugs, wobei der Antriebsstrang 1 gemäß Fig. 1 einen Hybridantrieb umfasst, der von einem Verbrennungsmotor 2 und einem Elektromotor 3 gebildet ist. Zwischen den Verbrennungsmotor 2 und den Elektromotor 3 ist eine Kupplung 4 geschaltet, die dann, wenn der Antriebsstrang 1 ausschließlich vom Elektromotor 3 betrieben wird, geöffnet ist. Neben dem Hybridantrieb umfasst der Antriebsstrang 1 gemäß Fig. 1 weiterhin ein Getriebe 5, welches das vom Hybridantrieb bereitgestellte Zugkraftangebot auf einem Abtrieb 6, nämlich anzutreibenden Rädern, des Antriebsstrangs umsetzt. Ein weiteres Schema eines Antriebsstrangs 7 eines Kraftfahrzeugs zeigt Fig. 2, wobei sich der Antriebsstrang der Fig. 2 vom Antriebsstrang der Fig. 1 dadurch unterscheidet, dass zwischen den Elektromotor 3 des Hybridantriebs und das Getriebe 5 eine Kupplung 8 geschaltet ist.

Wird ein Antriebsstrang gemäß Fig. 1 oder 2 bei geöffneter Kupplung 4 ausschließlich vom Elektromotor 3 des Hybridantriebs angetrieben, so kann es unter bestimmten Betriebsbedingungen erforderlich sein, den Verbrennungsmotor 2 des Hybridantriebs zu starten.

Im Sinne der hier vorliegenden Erfindung erfolgt das Starten des Verbrennungsmotors 2 unter Ausnutzung eines Schub-/Zugwechsels im Antriebsstrang. Dann, wenn bei ausgeschaltetem Verbrennungsmotor 2 der Antriebsstrang ausschließlich elektromotorisch vom Elektromotor 3 im Schubbetrieb betrieben wird und aus einem ermittelten Fahrerwunschmoment ein gewünschter Übergang vom Schubbetrieb in einen Zugbetrieb abgeleitet wird, wird unter Ausnutzung des Schub-/Zugwechsels der Verbrennungsmotor 2 derart gestartet, dass die zwischen dem Verbrennungsmotor 2 und dem Elektromotor 3 angeordnete Kupplung 4 zumindest derart teilweise geschlossen wird, dass dieselbe ein zum Starten des Verbrennungsmotors 2 erforderliches Moment überträgt. Es liegt demnach im Sinne der hier vorliegenden Erfindung, dann, wenn bei ausgeschaltetem Verbrennungsmotor 2 der Elektromotor 3 im Schub elektrisch bremst und demnach im Schubbetrieb bzw. sogenannten Rekuperationsbetrieb betrieben wird, bei einem gewünschten Übergang vom Schubbetrieb in den Zugbetrieb den Verbrennungsmotor 2 zu starten.

Die Ermittlung des Fahrerwunschmoments, aus welchem ein gewünschter Übergang vom Schubbetrieb in den Zugbetrieb abgeleitet wird, erfolgt insbesondere aus einer Bremspedalbetätigung und/oder Gaspedalbetätigung des Fahrers und ist unabhängig von der tatsächlichen Fahrzeugbeschleunigung. Dann, wenn im bremsenden Schubbetrieb bzw. im Rekuperationsbetrieb des Elektromotors 3 bei ausgeschaltetem Verbrennungsmotor 2 aus dem Fahrerwunschmoment ein gewünschter Schub-/Zugwechsel abgeleitet wird, erfolgt erfindungsgemäß das Starten des Verbrennungsmotors 2.

Vorzugsweise wird der Verbrennungsmotor 2 unter Ausnutzung des Schub-/Zugwechsels derart gestartet, dass dann, wenn das vom Elektromotor 3 am Antriebsstrang bzw. Abtrieb 6 bereitgestellte Moment in etwa Null beträgt, der Elektromotor 3 vom Abtrieb unter Bereitstellung einer Zugkraftunterbrechung abgekoppelt wird.

Anschließend wird der Verbrennungsmotor 2 bei unterbrochener Zugkraft durch zumindest teilweise Schließen der zwischen dem Verbrennungsmotor 2 und dem Elektromotor 3 angeordneten Kupplung 4 gestartet. Nach dem Starten des Verbrennungsmotors 2 wird der Elektromotor 3 an den Abtrieb 6 unter Aufhebung der Zugkraftunterbrechung angekoppelt.

Dann, wenn wie die Fig. 1 zeigt, zwischen den Elektromotor 3 und das Getriebe 5 keine Kupplung geschaltet ist, wird zur Ausführung des erfindungsgemäßen Verfahrens der Elektromotor 3 vom Abtrieb 6 durch Überführen des Getriebes 5 in eine Schaltstellung Neutral abgekoppelt, um die Zugkraftunterbrechung bereitzustellen. Anschließend wird der Verbrennungsmotor 2 durch zumindest teilweise Schließen der zwischen dem Verbrennungsmotor 2 und dem Elektromotor 3 angeordneten Kupplung 4 gestartet, wobei nach dem Starten des Verbrennungsmotors 2 der Elektromotor 3 an den Abtrieb durch Einlegen eines Gangs im Getriebe 5 unter Aufhebung der Zugkraftunterbrechung angekoppelt wird.

Im obigen Fall, in welchem der Antriebsstrang gemäß Fig. 1 keine Kupplung zwischen dem Elektromotor 3 und dem Getriebe 5 umfasst, kann nach dem Starten des Verbrennungsmotors 2 die zwischen dem Verbrennungsmotor 2 und dem Elektromotor 3 angeordnete Kupplung 4 entweder geschlossen bleiben oder auch geöffnet werden.

Dann, wenn nach dem Starten des Verbrennungsmotors 2 die Kupplung 4 geschlossen bleibt, ist bei Aufhebung der Zugkraftunterbrechung die zwischen dem Verbrennungsmotor 2 und dem Elektromotor 3 angeordnete Kupplung 4 geschlossen, wobei dann Elektromotor 3 und Verbrennungsmotor 2 zusammen synchronisieren und durch Einlegen eines Gangs im Getriebe 5 gemeinsam an den Abtrieb 6 angekoppelt werden.

Dann hingegen, wenn bei unterbrochener Zugkraft und nach dem Starten des Verbrennungsmotors 2 die zwischen dem Verbrennungsmotor 2 und dem Elektromotor 3 geschaltete Kupplung geöffnet wird, ist bei Aufhebung der Zugkraftunterbrechung die zwischen dem Verbrennungsmotor 2 und dem Elektromotor 3 angeordnete Kupplung 4 geöffnet, so dass bei Einlegen eines Gangs im Getriebe 5 nur der Elektromotor 3 synchronisiert. Erst nach Einlegen eines Gangs im Getriebe 5 wird in diesem Fall die zwischen dem Verbrennungsmotor 2 und dem Elektromotor 3 angeordnete Kupplung 4 geschlossen, in diesem Fall werden demnach Elektromotor 3 und Verbrennungsmotor 2 zeitversetzt an den Abtrieb 6 angekoppelt.

Im Ausführungsbeispiel der Fig. 2, in welchem zwischen dem Elektromotor 3 und dem Getriebe 5 eine Kupplung 8 positioniert ist, wird zur Ausführung des erfindungsgemäßen Verfahrens, dann, wenn das vom Elektromotor 3 am Antriebsstrang bzw. Abtrieb 6 bereitgestellte Moment in etwa Null beträgt, der Elektromotor 3 vom Abtrieb 6 durch Öffnen der zwischen dem Elektromotor 3 und dem Getriebe 5 angeordneten Kupplung 8 zur Bereitstellung der Zugkraftunterbrechung abgekoppelt. Anschließend wird der Verbrennungsmotor 2 durch Schließen der zwischen dem Verbrennungsmotor 2 und dem Elektromotor 3 angeordneten Kupplung 4 gestartet, wobei diese Kupplung 4 nach dem Starten des Verbrennungsmotors 2 geschlossen bleibt. Darauffolgend, nach dem Starten des Verbrennungsmotors 2, wird der Elektromotor 3 zusammen mit dem Verbrennungsmotor 2 an den Abtrieb 6 durch Schließen der zwischen dem Elektromotor 2 und dem Getriebe 5 angeordneten Kupplung 8 unter Aufhebung der Zugkraftunterbrechung angekoppelt. Bei Aufhebung der Zugkraftunterbrechung ist demnach die zwischen dem Verbrennungsmotor 2 und dem Elektromotor 3 angeordnete Kupplung 4 geschlossen. In diesem Fall werden demnach der Elektromotor 3 und der Verbrennungsmotor 2 zusammen über die Kupplung 8, die zwischen dem Elektromotor 3 und dem Getriebe 5 positioniert ist, mit dem Abtrieb 6 verbunden.

Nach der bevorzugten Weiterbildung der Erfindung, nach welcher das Starten des Verbrennungsmotors 2 bei Betrieb des Elektromotors 3 im Rekuperationsbetrieb unter Ausnutzung des Schub-/Zugwechsels und unter Bereitstellung einer Zugkraftunterbrechung erfolgt, ergibt sich am Abtrieb 6 des Antriebsstrangs ein Antriebsmoment M, wie es in Fig. 3 über der Zeit t aufgetragen ist. Bis zum Zeitpunkt t₁ wird ein Antriebsstrang ausschließlich elektromotorisch vom Elektromotor 3 bei ausgeschaltetem Verbrennungsmotor 2 im bremsenden Schubbetrieb und demnach Rekuperationsbetrieb betrieben, wobei zum Zeitpunkt t₁ aus einem ermittelten Fahrerwunschmoment ein gewünschter Übergang vom Schubbetrieb in den Zugbetrieb abgeleitet wird. Beginnend mit dem Zeitpunkt t₁ wird das vom Elektromotor 3 am Abtrieb 6 bereitgestellte Schubmoment kontinuierlich reduziert, wobei zum Zeitpunkt t₂ das vom Elektromotor 3 am Abtrieb 6 bereitgestellte Moment in etwa Null beträgt. Sodann wird der Elektromotor 3 vom Abtrieb 6 abgekoppelt, so dass demnach die Zugkraftunterbrechung bereitgestellt wird, wobei dann bei Zugkraftunterbrechung der Verbrennungsmotor 2 durch zumindest teilweise Schließen der Kupplung 4 gestartet werden kann. Nach dem Starten des Verbrennungsmotors 2 wird beginnend im Zeitpunkt t₃ durch Ankuppeln des Elektromotors 3 an den Abtrieb 6 die Zugkraftunterbrechung aufgehoben, wobei zum Zeitpunkt t₄ die Zugkraftunterbrechung aufgehoben ist, und unter Bereitstellung eines hybridischen Antriebs sowohl der Verbrennungsmotor 2 als auch der Elektromotor 3 an den Abtrieb 6 angekoppelt sind, um denselben im Zugbetrieb zu betreiben.

Das Starten des Verbrennungsmotors 2 beim Übergang vom Schubbetrieb in den Zugbetrieb erfolgt demnach dann, wenn das am Abtrieb 6 bereitgestellte Moment in etwa Null beträgt, wobei das Verfahren dann ausgeführt wird, wenn aus dem Fahrerwunschmoment ein gewünschter Schub-/Zugwechsel abgeleitet wird. Das Starten des Verbrennungsmotors richtet sich demnach nach dem Fahrerwunschmoment und wird durch eine Reaktion des Fahrers ausgelöst.

Wie in Fig. 3 durch den Kreis K1 verdeutlicht, wird vor Bereitstellung der Zugkraftunterbrechung der Elektromotor 3 derart angesteuert, dass sich der Gradient der Reduzierung des Schubmoments M kontinuierlich verringert, bis das vom Elektromotor 3 am Abtrieb 6 bereitgestellte Moment in etwa Null beträgt. Gemäß dem Kreis K2 wird nach Starten des Verbrennungsmotors 2 und nach Aufhebung der Zugkraftunterbrechung der Elektromotor 3 und gegebenenfalls der Verbrennungsmotor 2 derart angesteuert, dass sich der Gradient der Zugmomenterhöhung kontinuierlich vergrößert. Hierdurch kann der Komfort beim Starten des Verbrennungsmotors 2 gesteigert werden.

In der obigen Beschreibung der Erfindung unter Bezugnahme auf Fig. 1 und 2 wurde davon ausgegangen, dass dann, wenn bei abgeschaltetem Verbrennungsmotor 2 und bei Betrieb des Elektromotors 3 im Rekuperationsbetrieb aus dem Fahrerwunschmoment ein gewünschter Schub-/Zugwechsel abgeleitet wird, der Verbrennungsmotor 2 unter Bereitstellung einer Zugkraftunterbrechung gestartet wird. Im Unterschied hierzu ist es auch möglich, unter den Bedingungen eines Rekuperationsbetriebs des Elektromotors 3 und einem aus dem Fahrerwunschmoment abgeleiteten Schub-/Zugwechsels den Verbrennungsmotor 2 ohne Zugkraftunterbrechung zu starten, nämlich dann, wenn der Elektromotor 3 dauerhaft in den Abtrieb 6 des jeweiligen Antriebsstrangs eintreibt.

In diesem Fall muss die Drehzahl des Elektromotors 3 größer als eine Startdrehzahl des Verbrennungsmotors sein, wobei dann zum Starten des Verbrennungsmotors 2 die zwischen Verbrennungsmotor 2 und Elektromotor 3 angeordnete Kupplung 4 durch teilweise Schließen in Schlupf gebracht wird, um den Verbrennungsmotor 2 zu starten, und wobei anschließend die Kupplung 4 wieder vollständig geöffnet wird, und zwar vor Erreichen einer Synchrondrehzahl zwischen Verbrennungsmotor 2 und Elektromotor 3.

### Bezugszeichen

- 1: Antriebsstrang
- 2: Verbrennungsmotor
- 3: Elektromotor
- 4: Kupplung
- 5: Getriebe
- 6: Abtrieb
- 7: Antriebsstrang
- 8: Kupplung

## Patentansprüche

1. Verfahren zum Betreiben eines Antriebsstrangs eines Kraftfahrzeugs, wobei der Antriebsstrang zumindest einen Hybridantrieb mit einem Verbrennungsmotor und einem Elektromotor, ein zwischen dem Hybridantrieb und einem Abtrieb angeordnetes Getriebe und eine zwischen dem Verbrennungsmotor und dem Elektromotor angeordnete Kupplung umfasst, wobei dann, wenn ausschließlich der Elektromotor antreibt, der Verbrennungsmotor **dadurch** gestartet werden kann, dass die zwischen dem Verbrennungsmotor und dem Elektromotor angeordnete Kupplung geschlossen wird, **dadurch gekennzeichnet, dass** dann, wenn bei einem ausschließlichen elektromotorischen Antrieb der Elektromotor im Schubbetrieb betrieben wird und aus einem ermittelten Fahrerwunschmoment ein gewünschter Übergang vom Schubbetrieb in einen Zugbetrieb abgeleitet wird, der Verbrennungsmotor unter Ausnutzung des Schub-/Zugwechsels derart gestartet wird, dass die zwischen dem Verbrennungsmotor und dem Elektromotor angeordnete Kupplung zumindest teilweise geschlossen wird, sodass dieselbe ein zum Starten des Verbrennungsmotors erforderliches Moment überträgt.

2. Verfahren nach Anspruch 1, **dadurch gekennzeichnet, dass** der Verbrennungsmotor unter Ausnutzung des Schub-/Zugwechsels derart gestartet wird, dass dann, wenn das vom Elektromotor am Antriebstrang bereitgestellte Moment in etwa Null beträgt, der Elektromotor vom Abtrieb zur Bereitstellung einer Zugkraftunterbrechung abgekoppelt wird, dass anschließend der Verbrennungsmotor durch zumindest teilweises Schließen der zwischen dem Verbrennungsmotor und dem Elektromotor angeordnete Kupplung gestartet wird, und dass darauffolgend nach dem Starten des Verbrennungsmotors der Elektromotor an den Abtrieb zur Aufhebung der Zugkraftunterbrechung angekoppelt wird.

3. Verfahren nach Anspruch 2, **dadurch gekennzeichnet, dass** in dem Fall, dass der Antriebstrang eine zwischen dem Elektromotor und dem Getriebe angeordnete Kupplung umfasst, dann, wenn das vom Elektromotor am Antriebstrang bereitgestellte Moment in etwa Null beträgt, der Elektromotor vom Abtrieb durch Öffnen der zwischen dem Elektromotor und dem Getriebe angeordneten Kupplung zur Bereitstellung der Zugkraftunterbrechung abgekoppelt wird, dass anschließend der Verbrennungsmotor durch zumindest teilweises Schließen der zwischen dem Verbrennungsmotor und dem Elektromotor angeordnete Kupplung gestartet wird, und dass darauffolgend nach dem Starten des Verbrennungsmotors der Elektromotor an den Abtrieb durch Schließen der zwischen dem Elektromotor und dem Getriebe angeordneten Kupplung zur Aufhebung der Zugkraftunterbrechung angekoppelt wird, wobei hierbei die zwischen dem Verbrennungsmotor und dem Elektromotor angeordnete Kupplung geschlossen ist.

4. Verfahren nach Anspruch 2, **dadurch gekennzeichnet, dass** in dem Fall, dass der Antriebstrang keine zwischen dem Elektromotor und dem Getriebe angeordnete Kupplung umfasst, dann, wenn das vom Elektromotor am Antriebstrang bereitgestellte Moment in etwa Null beträgt, der Elektromotor vom Abtrieb durch Überführen des Getriebes in eine Schaltstellung Neutral zur Bereitstellung der Zugkraftunterbrechung abgekoppelt wird, dass anschließend der Verbrennungsmotor durch zumindest teilweises Schließen der zwischen dem Verbrennungsmotor und dem Elektromotor angeordnete Kupplung gestartet wird, und dass darauffolgend nach dem Starten des Verbrennungsmotors der Elektromotor an den Abtrieb durch Einlegen eines Gangs im Getriebe zur Aufhebung der Zugkraftunterbrechung angekoppelt wird.

5. Verfahren nach Anspruch 4, **dadurch gekennzeichnet, dass** bei Aufhebung der Zugkraftunterbrechung die zwischen dem Verbrennungsmotor und dem Elektromotor angeordnete Kupplung geschlossen ist.

6. Verfahren nach Anspruch 4, **dadurch gekennzeichnet, dass** bei Aufhebung der Zugkraftunterbrechung die zwischen dem Verbrennungsmotor und dem Elektromotor angeordnete Kupplung geöffnet ist, wobei hierzu nach dem Starten des Verbrennungsmotors und vor Einlegen eins Gangs im Getriebe die zwischen dem Verbrennungsmotor und dem Elektromotor angeordnete Kupplung geöffnet wird, und dass die zwischen dem Verbrennungsmotor und dem Elektromotor angeordnete Kupplung nach Einlegen eines Gangs im Getriebe geschlossen wird.

7. Verfahren nach einem Ansprüche 1 bis 6, **dadurch gekennzeichnet, dass** vor Bereitstellung der Zugkraftunterbrechung der Elektromotor derart angesteuert wird, dass sich der Gradient der Schubmomentreduzierung kontinuierlich verringert, und dass nach Aufhebung der Zugkraftunterbrechung der Elektromotor und/oder der Verbrennungsmotor derart angesteuert werden, dass sich der Gradient der Zugmomenterhöhung kontinuierlich vergrößert.

8. Verfahren nach Anspruch 1, **dadurch gekennzeichnet, dass** der Verbrennungsmotor unter Ausnutzung des Schub-/Zugwechsels derart gestartet wird, dass dann, wenn der Elektromotor dauerhaft bzw. ohne Zugkraftunterbrechung in den Abtrieb eintreibt und die Drehzahl des Elektromotors größer als eine Startdrehzahl des Verbrennungsmotors ist, zum Starten des Verbrennungsmotors die zwischen dem Verbrennungsmotor und dem Elektromotor angeordnete Kupplung derart gesteuert geschlossen und geöffnet wird, dass die Kupplung durch teilweises Schließen in Schlupf gebracht wird, um den Verbrennungsmotor zu starten, und dass anschließend dieselbe wieder vollständig geöffnet wird, und zwar vor Erreichen einer Synchrondrehzahl zwischen Verbrennungsmotor und Elektromotor.

## Claims

1. Method for operating a drive train of a motor vehicle, with the drive train comprising at least one hybrid drive having an internal combustion engine and an electric motor, a transmission which is arranged between the hybrid drive and an output drive, and a clutch which is arranged between the internal combustion engine and the electric motor, it being possible, when only the electric motor is driving, for the internal combustion engine to be started by the clutch which is arranged between the internal combustion engine and the electric motor being closed, **characterized in that**, when the electric motor is operated in overrun mode with only the electric motor driving, and a desired transition from the overrun mode to a traction mode is derived from a determined torque which is requested by the driver, the internal combustion engine is started, using the overrun/traction changeover, in such a way that the clutch which is arranged between the internal combustion engine and the electric motor is at least partially closed, and therefore the said clutch transmits a torque which is required to start the internal combustion engine.

2. Method according to Claim 1, **characterized in that** the internal combustion engine is started, using the overrun/traction changeover, in such a way that, when the torque which is provided by the electric motor to the drive train is approximately zero, the electric motor is uncoupled from the output drive in order to interrupt a traction force, **in that** the internal combustion engine is then started by at least partially closing the clutch which is arranged between the internal combustion engine and the electric motor, and **in that**, after the internal combustion engine is started, the electric motor is subsequently coupled to the output drive in order to cancel the interruption in traction force.

3. Method according to Claim 2, **characterized in that**, in the case of the drive train comprising a clutch which is arranged between the electric motor and the transmission, when the torque which is provided by the electric motor to the drive train is approximately zero, the electric motor is uncoupled from the output drive by opening the clutch which is arranged between the electric motor and the transmission in order to interrupt the traction force, **in that** the internal combustion engine is then started by at least partially closing the clutch which is arranged between the internal combustion engine and the electric motor, and **in that**, after the internal combustion engine is started, the electric motor is subsequently coupled to the output drive by closing the clutch which is arranged between the electric motor and the transmission in order to cancel the interruption in traction force, with the clutch which is arranged between the internal combustion engine and the electric motor being closed in this case.

4. Method according to Claim 2, **characterized in that**, in the case of the drive train not comprising a clutch which is arranged between the electric motor and the transmission, when the torque which is provided by the electric motor to the drive train is approximately zero, the electric motor is uncoupled from the output drive by moving the transmission to a neutral shift position in order to interrupt the traction force, **in that** the internal combustion engine is then started by at least partially closing the clutch which is arranged between the internal combustion engine and the electric motor, and **in that**, after the internal combustion engine is started, the electric motor is subsequently coupled to the output drive by engaging a gear in the transmission in order to cancel the interruption in traction force.

5. Method according to Claim 4, **characterized in that**, when the interruption in traction force is cancelled, the clutch which is arranged between the internal combustion engine and the electric motor is closed.

6. Method according to Claim 4, **characterized in that**, when the interruption in traction force is cancelled, the clutch which is arranged between the internal combustion engine and the electric motor is opened, with, after the internal combustion is started and before a gear in the transmission is engaged, the clutch which is arranged between the internal combustion engine and the electric motor being opened for this purpose, and **in that** the clutch which is arranged between the internal combustion engine and the electric motor is closed after a gear in the transmission is engaged.

7. Method according to one of Claims 1 to 6, **characterized in that**, before the traction force is interrupted, the electric motor is actuated in such a way that the gradient of the reduction in overrun torque reduces continuously, and **in that**, after the interruption in traction force is cancelled, the electric motor and/or the internal combustion engine are/is actuated in such a way that the gradient of the increase in traction torque increases continuously.

8. Method according to Claim 1, **characterized in that** the internal combustion engine is started, using the overrun/traction changeover, in such a way that, when the electric motor inputs its drive to the output drive permanently or without an interruption in traction force and the speed of the electric motor is greater than a starting speed of the internal combustion engine, for the purpose of starting the internal combustion engine, the clutch which is arranged between the internal combustion engine and the electric motor is closed and opened in a controlled manner in such a way that the clutch is made to slip by partial closure in order to start the internal combustion engine, and **in that** the said clutch is then completely opened again, specifically before a synchronous speed between the internal combustion engine and the electric motor is reached.

## Revendications

1. Procédé pour faire fonctionner une chaîne cinématique d'un véhicule automobile, dans lequel la chaîne cinématique comprend au moins un entraînement hybride avec un moteur à combustion interne et un moteur électrique, une transmission disposée entre l'entraînement hybride et une prise de force, et un embrayage disposé entre le moteur à combustion interne et le moteur électrique, dans lequel, lorsque seulement le moteur électrique a une action d'entraînement, le moteur à combustion interne peut être démarré en fermant l'embrayage disposé entre le moteur à combustion interne et le moteur électrique, **caractérisé en ce que** lorsque, dans un mode d'entraînement exclusivement au moyen du moteur électrique, le moteur électrique est entraîné en mode de poussée et l'on déduit d'un couple détecté souhaité par le conducteur un souhait de transition du mode de poussée en un mode de traction, le moteur à combustion interne est démarré en utilisant le changement poussée/traction de telle sorte que l'embrayage disposé entre le moteur à combustion interne et le moteur électrique soit au moins en partie fermé, de sorte que celui-ci transmette un couple requis pour le démarrage du moteur à combustion interne.

2. Procédé selon la revendication 1, **caractérisé en ce que** le moteur à combustion interne est démarré en utilisant le changement poussée/traction de telle sorte que lorsque le couple fourni par le moteur électrique à la chaîne cinématique est approximativement nul, le moteur électrique soit désaccouplé de la prise de force pour fournir une interruption de la force de traction, **en ce qu'**ensuite le moteur à combustion interne est démarré par fermeture au moins partielle de l'embrayage disposé entre le moteur à combustion interne et le moteur électrique, et **en ce qu'**ensuite après le démarrage du moteur à combustion interne, le moteur électrique est accouplé à la prise de force pour supprimer l'interruption de la force de traction.

3. Procédé selon la revendication 2, **caractérisé en ce que** dans le cas où la chaîne cinématique comprend un embrayage disposé entre le moteur électrique et la transmission, lorsque le couple fourni par le moteur électrique à la chaîne cinématique est approximativement nul, le moteur électrique est désaccouplé de la prise de force en ouvrant l'embrayage disposé entre le moteur électrique et la transmission, pour fournir l'interruption de la force de traction, **en ce qu'**ensuite le moteur à combustion interne est démarré en fermant au moins en partie l'embrayage disposé entre le moteur à combustion interne et le moteur électrique, et **en ce qu'**ensuite, après le démarrage du moteur à combustion interne, le moteur électrique est accouplé à la prise de force en fermant l'embrayage disposé entre le moteur électrique et la transmission pour supprimer l'interruption de la force de traction, l'embrayage disposé entre le moteur à combustion interne et le moteur électrique étant dans ce cas fermé.

4. Procédé selon la revendication 2, **caractérisé en ce que** dans le cas où la chaîne cinématique ne comprend pas d'embrayage disposé entre le moteur électrique et la transmission, lorsque le couple fourni par le moteur électrique à la chaîne cinématique est approximativement nul, le moteur électrique est désaccouplé de la prise de force en transférant la transmission dans une position de commutation neutre pour fournir l'interruption de la force de traction, **en ce qu'**ensuite le moteur à combustion interne est démarré en fermant au moins en partie l'embrayage disposé entre le moteur à combustion interne et le moteur électrique, et **en ce qu'**ensuite, après le démarrage du moteur à combustion interne, le moteur électrique est accouplé à la prise de force par l'enclenchement d'une vitesse dans la transmission pour supprimer l'interruption de la force de traction.

5. Procédé selon la revendication 4, **caractérisé en ce que** lors de la suppression de l'interruption de la force de traction, l'embrayage disposé entre le moteur à combustion interne et le moteur électrique est fermé.

6. Procédé selon la revendication 4, **caractérisé en ce que** lors de la suppression de l'interruption de la force de traction, l'embrayage disposé entre le moteur à combustion interne et le moteur électrique est ouvert, et à cet effet, après le démarrage du moteur à combustion interne et avant l'enclenchement d'une vitesse dans la transmission, l'embrayage disposé entre le moteur à combustion interne et le moteur électrique est ouvert, et **en ce que** l'embrayage disposé entre le moteur à combustion interne et le moteur électrique est fermé après l'enclenchement d'une vitesse dans la transmission.

7. Procédé selon l'une quelconque des revendications 1 à 6, **caractérisé en ce qu'**avant la fourniture de l'interruption de la force de traction, le moteur électrique est commandé de telle sorte que le gradient de réduction du couple de poussée diminue en continu, et **en ce qu'**après la suppression de l'interruption de la force de traction, le moteur électrique et/ou le moteur à combustion interne sont commandés de telle sorte que le gradient d'augmentation du couple de traction augmente en continu.

8. Procédé selon la revendication 1, **caractérisé en ce que** le moteur à combustion interne est démarré en utilisant le changement poussée/traction de telle sorte que lorsque le moteur électrique est en mode d'entraînement de manière durable ou sans interruption de la force de traction dans la prise de force, et le régime du moteur électrique est supérieur à un régime de démarrage du moteur à combustion interne, pour démarrer le moteur à combustion interne, l'embrayage disposé entre le moteur à combustion interne et le moteur électrique est commandé pour se fermer et pour s'ouvrir de telle sorte que l'embrayage soit amené en mode de glissement par une fermeture partielle, afin de démarrer le moteur à combustion interne, et **en ce qu'**ensuite celui-ci est à nouveau complètement ouvert et ce avant d'atteindre un régime synchrone entre le moteur à combustion interne et le moteur électrique.
